# EUROPÄISCHE PATENTSCHRIFT

(11) **EP 2 176 641 B1**
(45) Veröffentlichungstag und Bekanntmachung des Hinweises auf die Patenterteilung: **18.07.2018**
(21) Anmeldenummer: 08785560.7
(22) Anmeldetag: 14.08.2008
(51) Int. Cl.: G01N 21/27, G07D 7/06, G07D 7/1205

(54) **VORRICHTUNG UND VERFAHREN FÜR DIE KALIBRIERUNG EINES SENSORSYSTEMS**
DEVICE AND METHOD FOR CALIBRATING A SENSOR SYSTEM
DISPOSITIF ET PROCÉDÉ D'ÉTALONNAGE D'UN SYSTÈME DE DÉTECTEURS

(30) Priorität: 16.08.2007 DE 102007038753
(43) Veröffentlichungstag der Anmeldung: 21.04.2010
(73) Patentinhaber: Giesecke+Devrient Currency Technology GmbH, 81677 München (DE)
(72) Erfinder: PRADEL, Helmut, 80804 München (DE)
(86) Internationale Anmeldenummer: PCT/EP2008/006712
(87) Internationale Veröffentlichungsnummer: WO 2009/021745

(56) Entgegenhaltungen:
- EP-A- 0 878 704
- WO-A-2006/025846
- WO-A-2006/035012
- DE-A1-102004 021 448
- US-A- 5 764 346
- US-A1- 2001 008 275

## Beschreibung

Die Erfindung betrifft ein Verfahren für die Kalibrierung eines Sensorsystems.

Um eine korrekte Funktion von Sensoren sicherzustellen, werden Sensoren üblicherweise kalibriert. Für die Kalibrierung von Sensoren werden Kalibriermedien verwendet, die bestimmte, fest vorgegebene Eigenschaften aufweisen. Mittels dieser bekannten Eigenschaften ist es möglich, die Sensoren zu kalibrieren, da die bekannten Eigenschaften der Kalibriermedien bestimmte, zu erwartende Meßsignale der Sensoren hervorrufen müssen. Damit ist es möglich Abweichungen der Sensoren, die z. B. herstellungs-, alterungs-, verschmutzungsbedingt usw. hervorgerufen werden, zu erkennen und bei Messungen zu berücksichtigen. Dazu wird in einem Kalibriermodus festgestellt, ob die Meßsignale der Sensoren von den aufgrund des verwendeten Kalibriermediums zu erwartenden Meßsignalen abweichen. Die Größe der ermittelten Abweichungen legt die für eine Korrektur der Abweichungen erforderlichen Einstellungen fest. Dazu können beispielsweise Korrekturfaktoren bestimmt werden, mit denen die Meßsignale der Sensoren bei anschließenden Messungen im Betriebsmodus beaufschlagt werden, um die Abweichungen auszugleichen. Ebenso kann die Intensität einer Anregungsquelle, beispielsweise einer Beleuchtung, bei der Korrektur verändert werden, bis die Meßsignale des Sensors die zu erwartenden Werte aufweisen. Die veränderte Intensität der Anregungsquelle wird beibehalten und anschließend für Messungen mit dem Sensor verwendet, wodurch die aufgetretenen Abweichungen ausgeglichen werden.

Besondere Schwierigkeiten treten auf, wenn an die Kalibrierung von Sensoren hohe Ansprüche gestellt werden, weil mittels der Sensoren sensible Messungen vorgenommen werden, z. B. die Erkennung von Wertdokumenten, nachfolgende als Banknoten bezeichnet, deren Art (Währung, Denomination), Echtheit, Zustand (Verschmutzung, Beschädigung) usw. festgestellt werden soll. In derartigen Fällen ist eine sehr präzise Kalibrierung der Sensoren erforderlich, da Fehlbeurteilungen aufgrund falscher Meßsignale der Sensoren unbedingt vermieden werden müssen, weshalb neben einem Weißabgleich auch unbedingt ein Farbabgleich durchzuführen ist, um Fehlbeurteilungen sicher vermeiden zu können. In diesem Zusammenhang hat sich auch die Verwendung von hochwertigen Kalibiermedien mit standardisierten Referenzen, sogenannten Meßnormalen, aus verschiedenen Gründen als problematisch herausgestellt.

Aus der WO 2006/025846 A1 ist eine selbstkalibrierendes optisches System bekannt, das ein hochwertiges Kalibriermedium mit einer standardisierten Weißreferenz verwendet, welches in einem Sensorgehäuse des optischen Systems integriert ist. Das Kalibriermedium mit der standardisierten Weißreferenz wird während des Kalibriermodus mittels einer Mechanik innerhalb des Sensorgehäuses in den Strahlengang des Sensors eingeklappt. Aufgrund der definierten optischen Eigenschaften der standardisierten Weißreferenz ist jederzeit eine Selbstkalibrierung des Sensors möglich. Im Betriebsmodus wird das Kalibriermedium mittels der Mechanik aus dem Strahlengang des Sensors geklappt, um Messungen z. B. pharmazeutischer Produkte zu ermöglichen. Zusätzlich wird vorgeschlagen ein weiters Kalibriermedium zu verwenden, welches bestimmte spektrale Eigenschaften hat. Für diese weitere Kalibriermedium ist auch eine weitere Mechanik vorgesehen, um das weitere Kalibriermedium innerhalb des Sensorgehäuses in den Strahlengang des Sensors ein- und ausklappen zu können.

Das aus WO 2006/025846 A1 bekannte selbstkalibrierende optische System weist jedoch den Nachteil auf, daß für jedes zu verwendende Kalibriermedium eine eigene Mechanik verwendet werden muß, um die Kalibriermedien nacheinander in den Strahlengang des Sensor ein- und ausklappen zu können, damit dieser mittels der unterschiedliche Eigenschaften aufweisenden Kalibriermedien kalibrieren zu können, beispielsweise eine Weiß- und Farbabgleich durchführen zu können.

Ein weiteres Problem ergibt sich aus der Tatsache, daß ein hochwertige Kalibriermedien mit standardisierten Referenzen verwendet werden müssen, um die gewünschte jederzeitige Selbstkalibrierung zu ermöglichen. Die Verwendung der standardisierten Referenzen weist zum einen den Nachteil auf, daß derartige standardisierte Referenz in jedem zu kalibrierenden optischen System eingesetzt werden müssen, derartige standardisierte Referenzen für die Kalibrierung aber teuer sind. Dies resultiert aus der Notwendigkeit die standardisierten Referenzen exakt zu vermessen, da für die Selbstkalibrierung sichergestellt sein muß, daß die die Referenzen exakt die gewünschten Eigenschaften aufweisen. Zum anderen kann es, trotz der relativ geschützten Unterbringung der standardisierten Referenz zu z. B. alterungsbedingten Veränderungen der standardisierten Referenz kommen. In diesem Fall ist keine zuverlässige Selbstkalibrierung des Sensors mehr möglich.

Weiterhin ist durch die Unterbringung der Kalibriermedien mit den standardisierten Referenzen innerhalb des Sensorgehäuses und des Einklappens in den Strahlengang des zu kalibrierenden Sensors innerhalb des Sensorgehäuses immer eine Abweichung vom eigentlichen Meßort des Sensors gegeben, der außerhalb des Sensorgehäuses liegt. Diese Problematik wird noch vergrößert, wenn die Sensoren bzw. eine zugehörige Beleuchtung größere zeilen- oder flächenförmige Gebiete erfassen sollen, weshalb sie beispielsweise als Zeilenkamera aufgebaut sind. Derartige Sensoren weisen eine Vielzahl von Elementen auf, die nebeneinander angeordnet sind, um z. B. den zeilenförmigen Sensor bzw. seine Beleuchtung mit einer erforderlichen Länge zu bilden. In der Regel weisen derartige Sensoren bzw. Beleuchtungen zudem optisch abbildende Systeme auf. In derartigen Fällen ist es zum einen wünschenswert eine Kalibrierung für alle den Sensor bildenden Elemente durchführen zu können, zum anderen tritt bei der bekannten Kalibrierung eine Unschärfe auf, da das Kalibriermedium nicht im Fokusbereich des Sensors liegt, innerhalb dessen im Betriebsmodus die Messung von Meßobjekten, z. B. Banknoten, erfolgt.

Aus der DE 10 2004 021 448 A1 ist ein Verfahren zur Rekalibrierung bekannt, bei dem neben externen Kalibriermedien auch innerhalb eines Sensors angeordnete Kalibriermedien verwendet werden. Jedoch handelt es sich bei allen verwendeten Kalibriermedien um standardisierte Referenzen.

Ausgehend von diesem Stand der Technik liegt der Erfindung die Aufgabe zugrunde, ein Verfahren für die Kalibrierung eines Sensorsystems anzugeben, welches bei verringertem Aufwand eine präzise Kalibrierung ermöglichen. Weiterhin soll eine Langzeitstabilität für die Kalibrierung erreicht werden.

Die Lösung dieser Aufgaben ergibt sich aus den Merkmalen des unabhängigen Anspruchs 1. Weiterbildungen sind Gegenstand der Unteransprüche.

Die Erfindung geht von einer Vorrichtung für die Kalibrierung eines Sensorsystems in einem Sensorgehäuse, mit mindestens einem Sensors und mindestens einer Anregungsquelle, einer Steuereinrichtung zur Steuerung des Sensorsystems, einem Kalibriermedium und einem Antrieb, der das Kalibriermedium, gesteuert durch die Steuereinrichtung, in einem Kalibriermodus für die Kalibrierung des Sensorsystems in einen Strahlengang des Sensorsystems bewegt und das Kalibriermedium in einem Betriebsmodus für die Prüfung von Meßobjekten, insbesondere Banknoten, aus dem Strahlengang des Sensorsystems herausbewegt, aus, bei der das Kalibriermedium mehr als eine Referenz aufweist, bei der der Antrieb, gesteuert durch die Steuereinrichtung, das Kalibriermedium derart in den Strahlengang des Sensorsystems bewegt, daß eine der Referenzen einen Erfassungsbereich des Sensorsystems abdeckt, und das Sensorsystem die im Erfassungsbereich liegende Referenz mißt, bei der der Antrieb das Kalibriermedium unter Steuerung der Steuereinrichtung mindestens einmal um eine vorgegebene Strecke oder ein Vielfaches der vorgegebenen Strecke bewegt, so daß eine andere der Referenzen den Erfassungsbereich abdeckt, und das Sensorsystem die im Erfassungsbereich liegende andere Referenz mißt, und bei der die vorgegebene Strecke einer Ausdehnung der einzelnen Referenzen des Kalibriermediums entspricht, in deren Richtung der Antrieb das Kalibriermedium bewegt, wobei das Sensorsystem mittels eines Verfahrens kalibriert wird, bei dem ein erster Kalibrierungsschritt vorgesehen ist, bei dem ein von dem Sensorsystem unabhängiges weiteres Kalibriermedium, mit standardisierten Referenzen, in einen außerhalb des Sensorgehäuses liegenden Fokusbereich des Sensorsystems eingebracht wird und den gesamten Erfassungsbereich des Sensorsystems abdeckt, an dem sich während des Betriebsmodus das jeweils zu prüfende Meßobjekt befindet, wobei die Anregungsquelle des Sensorsystems das weitere Kalibriermedium mit einem Anregungssignal anregt und nacheinander aufgrund des Anregungssignals von den standardisierten Referenzen des weiteren Kalibriermediums erzeugte Signale von mindestens einem Sensor des Sensorsystems detektiert und Meßsignale erzeugt werden, und wobei aufgrund der Meßsignale eine Einstellung des Sensorsystems vorgenommen wird, und einen zweiten Kalibrierungsschritt, der unmittelbar nach dem ersten Kalibrierungsschritt durchgeführt wird, wobei das Kalibriermedium, mit nicht standardisierten Referenzen, an einen Ort in den Strahlengang des Sensorsystems eingebracht wird, der um eine Distanz zum Fokusbereich des Sensorsystems in das Sensorgehäuse hinein versetzt ist, und den gesamten Erfassungsbereich des Sensorsystems abdeckt, wobei die Anregungsquelle des Sensorsystems das Kalibriermedium mit dem Anregungssignal anregt und nacheinander aufgrund des Anregungssignals von den Referenzen des Kalibriermediums erzeugte Signale vom Sensor detektiert und Meßsignale erzeugt werden, und
wobei die Meßsignale des zweiten Kalibrierungsschritts gespeichert werden, und weiterhin im Kalibriermodus das Kalibriermedium erneut an den Ort in den Strahlengang des Sensorsystems eingebracht wird, der um die Distanz zum Fokusbereich des Sensorsystems in das Sensorgehäuse hinein versetzt ist, und den gesamten Erfassungsbereich des Sensorsystems abdeckt, wobei die Anregungsquelle des Sensorsystems das Kalibriermedium mit dem Anregungssignal anregt und nacheinander aufgrund des Anregungssignals von den Referenzen des Kalibriermediums erzeugte Signale vom Sensor detektiert und Meßsignale erzeugt werden, und wobei die Meßsignale des Kalibriermodus mit dem gespeicherten Meßsignalen des zweiten Kalibrierungsschritts verglichen werden, und eine Einstellung des Sensorsystems vorgenommen wird, falls eines oder mehrere der Meßsignale des Kalibriermodus von den gespeicherten Meßsignalen des zweiten Kalibrierungsschritts abweichen.

Der Vorteil besteht darin, daß nur ein hochwertiges Kalibriermedium mit standardisierten Referenzen verwendet werden muß, um die gewünschte Kalibrierung zu ermöglichen. Dieses hochwertige Kalibriermedium muß nur einmalig eingesetzt werden, z. B. bei der Herstellung oder Reparatur des zu kalibrierenden Sensorsystems. Da dieses hochwertige Kalibriermedium für alle hergestellten Sensorsysteme verwendet werden kann, wird zudem erreicht, daß alle Sensorsysteme eines Typs gleichartig kalibriert sind und somit vergleichbare Meßsignale für ein bestimmtes Meßobjekt liefern.

Für die Kalibrierung des Sensorsystems im normalen Betrieb kann ein kostengünstiges Kalibriermedium mit nicht standardisierten Referenzen verwendet werden. Dies hat zudem den weiten Vorteil, daß das hochwertige Kalibriermedium mit den standardisierten Referenzen keinerlei schädlichen Umwelteinflüssen während des Betriebs des Sensorsystems ausgesetzt ist und Veränderungen des kostengünstigen Kalibriermediums, mit den nicht standardisierten Referenzen, während des Betriebs bei der Kalibrierung berücksichtigt werden. Dies erlaubt eine langzeitstabile Kalibrierung des Sensorsystems. Zusätzlich werden bei dem erfindungsgemäßen Verfahren Abweichung des Kalibriermediums vom eigentlichen Meßort des Sensorsystems berücksichtigt, wodurch eine wesentlich präzisere Kalibrierung des Sensorsystems ermöglicht wird, die zudem den gesamten Erfassungsbereich des Sensorsystems umfaßt.

Weitere Ausführungsformen und Vorteile der Erfindung werden im Folgenden anhand der Figuren sowie deren Beschreibung erläutert. Es zeigen
- Figur 1: eine prinzipielle Ausführungsform eines Sensorsystems mit einem Kalibriermedium als Schnittdarstellung, mit einem Schnitt senkrecht zur Längsachse des Sensorsystems,
- Figur 2: das Sensorsystem nach Figur 1 als Schnittdarstellung, mit einem Schnitt parallel zur Längsachse des Sensorsystems, in einer in Figur 1 angegebenen Blickrichtung A-A,
- Figur 3: das Sensorsystem nach Figur 1, nach einer Bewegung des Kalibriermediums, und
- Figur 4: eine prinzipielle Ausführungsform des in Figur 1 dargestellten Kalibrierungsmediums.

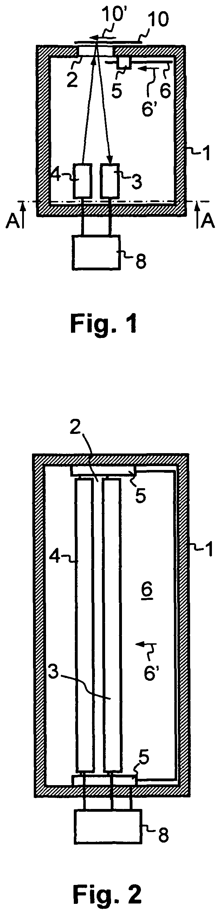

Figur 1 zeigt eine prinzipielle Ausführungsform eines Sensorsystems mit einem Kalibriermedium als Schnittdarstellung, mit einem Schnitt senkrecht zur Längsachse des Sensorsystems. Figur 2 zeigt das Sensorsystem nach Figur 1 als Schnittdarstellung, mit einem Schnitt parallel zur Längsachse des Sensorsystems, in einer in Figur 1 angegebenen Blickrichtung A-A.

Das Sensorsystem besteht aus einem Sensorgehäuse 1, in welchem mindestens ein Sensor 3 und eine Anregungsquelle 4 enthalten sind. Im dargestellten Beispiel handelt es sich bei dem Sensor 3 um eine Zeilenkamera, die von einer Anzahl nebeneinander angeordneter Detektoren gebildet wird, z. B. Fotodioden oder von einem CCD-Element. Ebenso können zwei oder mehr Zeilenkameras parallel nebeneinander angeordnet sein. Die Anregungsquelle 4 ist eine ebenfalls zeilenförmig aufgebaute Beleuchtung, die z. B. aus einer Anzahl nebeneinander angeordneter Elemente wie Leuchtdioden bestehen kann. Die Beleuchtung 4 kann beispielsweise weißes Licht aussenden, es ist aber auch möglich, daß Beleuchtung 4 Licht mit bestimmten spektralen Eigenschaften aussendet, z. B. infrarotes, rotes, grünes, blaues, ultraviolettes Licht usw. Im Sensorgehäuse 1 ist ein Fenster 2 vorgesehen, welches für das Licht der Beleuchtung 4 und das zum Sensor 3 zurückreflektierte Licht durchlässig ist. Das Sensorgehäuse 1 kann staubdicht ausgebildet sein, um eine Verschmutzung des Sensors 3 bzw. der Beleuchtung 4 zu verhindern. Der Sensor 3 sowie die Beleuchtung 4 stehen mit einer Steuereinrichtung 8 in Verbindung, welche den Sensor 3 sowie die Beleuchtung 4 steuert und die Signale des Sensors 3 auswertet. Die Steuereinrichtung 8 kann beispielsweise von einem Mikroprozessor oder einem digitalen Signalprozessor gebildet werden, der über einen flüchtigen Arbeitsspeicher sowie einen nichtflüchtigen Speicher, für die Speicherung von Software und für den Betrieb erforderliche Parameter, verfügen kann.

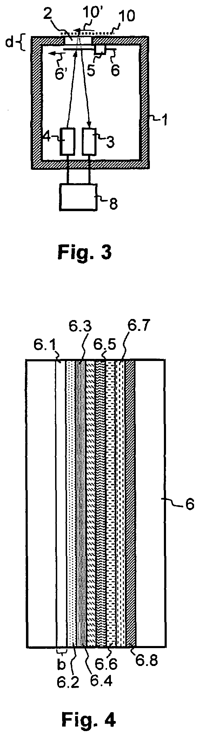

Im Sensorgehäuse 1 befindet sich zudem ein Kalibriermedium 6, welches mit einem Antrieb 5, beispielsweise einem Linearantrieb, verbunden ist. Der Antrieb 5 kann das Kalibriermedium 6 in einer ersten Richtung 6' bewegen, so daß das Kalibriermedium 6 in den Bereich des Fensters 2 sowie in den Erfassungsbereich des Sensorsystems ragt und das Fenster 2 schließlich, wie in Figur 3 dargestellt, völlig verdeckt. In dieser Position des Kalibriermediums 6 wird mit der Kalibrierung des Sensors 3 begonnen. Prinzipiell ist es möglich mit der Kalibrierung zu beginnen, sobald das Kalibriermedium 6 in den Erfassungsbereich des Sensors 3 gelangt ist, es wird jedoch bevorzugt die Kalibrierung erst zu beginnen, nachdem das Kalibriermedium 6 den Bereich des Fensters 2 vollständig abdeckt, da es auf diese Weise möglich ist, Fehler bei der Kalibrierung zu vermeiden, die von externen Störsignalen verursacht werden.

Figur 4 zeigt eine prinzipielle Ausführungsform des in Figur 1 dargestellten Kalibrierungsmediums 6. Das Kalibriermedium 6 weist eine Anzahl von streifenförmigen Referenzen 6.1 bis 6.8 auf, die sich beispielsweise über die gesamte Länge des Kalibriermediums 6 erstrecken und eine Breite b aufweisen. Die Abmessungen des Kalibriermediums sowie der Referenzen 6.1 bis 6.8 wird derart festgelegt, daß mindestens der gesamte Erfassungsbereich des Sensors 3 an der Stelle der Einbringung des Kalibriermediums 6 in den Strahlengang des Sensors 3 abgedeckt ist.

Bei der Kalibrierung des Sensors 3 wird das Kalibriermedium 6 vom Antrieb 5 solange bewegt, bis die erste Referenz 6.1 im Strahlengang des Sensors 3 liegt und dessen Erfassungsbereich abdeckt. Danach erfolgt eine Messung zur Kalibrierung des Sensors 3 mittels der ersten Referenz 6.1, wozu die Beleuchtung 4 die erste Referenz 6.1 beleuchtet und der Sensor 3 das von der ersten Referenz 6.1 reflektierte Licht detektiert und ein Meßsignal erzeugt, welches von der Steuereinrichtung 8 z. B. im nichtflüchtigen Speicher gespeichert wird. Ein Meßsignal kann auch für jeden der den Sensor 3 bildenden Detektoren erzeugt werden. Anschließend wird das Kalibriermedium 6 vom Antrieb 5 um eine Strecke b bewegt, welche der Breite b der Referenzen 6.1 bis 6.8 entspricht. Im Erfassungsbereich des Sensors 3 befindet sich nunmehr die zweite Referenz 6.2 und es wird erneut ein Meßsignal vom Sensor 3 erzeugt und von der Steuereinrichtung 8 gespeichert. Danach wiederholt sich der beschriebene Vorgang für die anderen Referenzen 6.3 bis 6.8.

Mittels der gespeicherten Meßsignale der Referenzen 6.1 bis 6.8 kalibriert die Steuereinrichtung 8 den Sensor 3 bzw. die den Sensor 3 bildenden einzelnen Detektoren, wozu die gespeicherten Meßsignale mit hinterlegten Werten für die jeweilige Referenz 6.1 bis 6.8 verglichen werden. Um erkannte Abweichungen ausgleichen und den Sensorsystem einstellen zu können, kann es vorgesehen sein, daß die Steuereinrichtung 8 Korrekturfaktoren ermittelt, welche gespeichert werden und bei späteren Messungen von Meßobjekten, z. B. Banknoten, dazu verwendet werden die vorhandenen Abweichungen auszugleichen. Ebenso kann es vorgesehen sein, daß bei den Messungen für die einzelnen Referenzen 6.1 bis 6.8 die Intensität der Beleuchtung 4 bzw. deren einzelner Elemente von der Steuereinrichtung 8 verändert wird, bis die bei den Messungen vorhandenen Abweichungen ausgeglichen sind. Dabei werden die bestimmten Parameter für die Beleuchtung 4 ebenfalls im nichtflüchtigen Speicher der Steuereinrichtung 8 für spätere Messungen gespeichert. Es ist auch möglich, sowohl Korrekturfaktoren für die Meßsignale als auch veränderte Intensitäten der Beleuchtung 4 vorzusehen, um vorhandene Abweichungen ausgleichen zu können. Außerdem können die Meßsignale des Sensors 4 bzw. der einzelnen Detektoren für spätere Vergleiche gespeichert werden.

Das Kalibriermedium 6 weist am Anfang und Ende neben den Referenzen 6.1 bis 6.8 freie Bereiche auf, die sich wegen der oben geschilderten Forderung ergeben, daß das Fenster 2 vom Kalibriermedium 6 verdeckt werden soll, damit externe Störsignale den Kalibrierungsvorgang nicht negativ beeinflussen können. Die einzelnen Referenzen weisen unterschiedliche Eigenschaften auf und werden je nach Art des zu kalibrierenden Sensors ausgewählt. Für optische Sensoren kann es vorgesehen sein, daß eine der Referenzen 6.1 bis 6.8 eine Weißreferenz ist, andere Referenzen 6.1 bis 6.8 können bestimmte spektrale Eigenschaften aufweisen, beispielsweise infrarote, rote, grüne, blaue, ultraviolette usw. Referenzen sein. Es ist offensichtlich, daß die Anzahl der verwendeten Referenzen von der im Beispiel in Figur 4 dargestellten Anzahl von acht Referenzen abweichen kann. Besonders stabile Referenzen können mittels Interferenzfiltern gebildet werden. Die Referenzen 6.1 bis 6.8 werden in diesem Fall z. B. von Schichtinterferenzfiltern gebildet, die bestimmte Wellenlängen oder Wellenlängenbereiche sperren oder passieren lassen. Sollen die Referenzen 6.1 bis 6.8 für Messungen in Remission verwendet werden, kann der oder die Interferenzfilter auf ein reflektierendes Trägermaterial aufgebracht werden.

Ebenso ist offensichtlich, daß beim oben beschriebenen Kalibriervorgang nicht alle Referenzen 6.1 bis 6.8 benutzt werden müssen, oder daß nicht bei jeder Kalibrierung alle Referenzen 6.1 bis 6.8 verwendet werden. In diesem Fall wird das Kalibriermedium 6 von dem Antrieb 5 zwischen den Messungen für die einzelnen Referenzen 6.1 bis 6.8 um Strecken verschoben, die Mehrfache der Breite b der Referenzen 6.1 bis 6.8 sind. Sollten die einzelnen Referenzen 6.1 bis 6.8 nicht unmittelbar aneinandergrenzen, ist selbstverständlich der Abstand zwischen ihnen bei der Bestimmung der Breite b zu berücksichtigen. Gleiches gilt für unterschiedliche Breiten b der einzelnen Referenzen 6.1 bis 6.8.

Abweichend von der oben beschriebenen Ausführungsform kann das Kalibriermedium 6 sowie der Antrieb 5 eine andere Realisierung aufweisen, so daß das Kalibriermedium 6 z. B. durch drehen, kippen, schwenken, schieben, ziehen usw. in den Strahlengang des Sensors 3 gebracht und wieder entfernt wird. Generell sind translatorische oder rotatorische Bewegungen oder zusammengesetzte Bewegungen möglich. Dabei ist insbesondere zu berücksichtigen, daß der jeweilige Antrieb das Kalibriermedium 6 derart bewegt, daß die einzelnen Referenzen 6.1 bis 6.8 für die einzelnen Messungen genau im Erfassungsbereich des Sensors 3 positioniert werden, also jeweils um die Breite b der jeweiligen Referenz 6.1 bis 6.8 bewegt werden.

Soll für die Kalibrierung des Sensorsystems das oben beschriebene Kalibrierungsmedium 6 kostengünstig realisiert werden, d. h. es wird insbesondere auf die Verwendung von standardisierten Referenzen 6.1 bis 6.8 verzieht, ist eine vorherige Kalibrierung mit einem weiteren Kalibriermedium erforderlich, welches standardisierte Referenzen aufweist. Dazu wird in einem ersten Kalibrierungsschritt ein weiteres Kalibriermedium 10 (Figur 1) in den Erfassungsbereich des Sensorsystems eingebracht 10'. Dies kann beispielsweise durch eine Bedienperson geschehen, es ist aber auch möglich, daß das weitere Kalibriermedium 10 von einem Transportsystem eingebracht wird, das z. B. Bestandteil einer Banknotenbearbeitungsmaschine ist, in welcher das Sensorsystem eingebaut und zur Überprüfung von Banknoten verwendet wird.

Das weitere Kalibriermedium 10 wird dabei so positioniert, daß es sich im Fokusbereich des Sensorsystems befindet, d. h. an einem Ort, an dem sich auch die zu untersuchenden Meßobjekte während eines Betriebsmodus befinden, z. B. Banknoten in der Banknotenbearbeitungsmaschine. Das weitere Kalibriermedium 10 ist dabei derart dimensioniert, daß es den gesamten Erfassungsbereich des Sensorsystems abdeckt. Es weist also insbesondere eine Länge auf, welche einer Läge des Sensors 3, wie z. B. in Figur 2 dargestellt, oder der Länge seines optischen Erfassungsbereichs entspricht. Vorteilhafterweise wird das weitere Kalibriermedium 10 so groß gestaltet, daß es das gesamte Fenster 2 abdeckt. Dadurch wird vermieden, daß die Kalibrierung mittels des weiteren Kalibriermediums 10 von externen Störsignalen beeinflußt wird. Das weitere Kalibriermedium 10 weist hochwertige, standardisierte Referenzen auf, die in ihren Eigenschaften prinzipiell den Eigenschaften der Referenzen 6.1 bis 6.8 des zuvor beschriebenen Kalibriermediums 6 entsprechen. Die Referenzen 6.1 bis 6.8 des Kalibriermediums 6 sind jedoch im Gegensatz zu den Referenzen des weiteren Kalibriermediums 10 nicht standardisiert. Ebenso ist es möglich, daß das Kalibriermedium 6 über eine Referenz mit Eigenschaften verfügt, welche den Eigenschaften der Referenz des weiteren Kalibriermediums 10 zumindest ähnlich sind. Ist eine der Referenzen des weiteren Kalibriermediums 10 eine Weißreferenz, kann beispielsweise für das Kalibriermedium 6 eine Referenz verwendet werden, die weiß oder relativ hell ist. Idealerweise sollten die Eigenschaften der Referenzen des Kalibriermediums 6 alterungsstabil sein.

Gesteuert durch die Steuereinrichtung 8, wird beim ersten Kalibrierungsschritt das weitere Kalibriermedium 10 mit der Beleuchtung 4 beleuchtet und das vom weiteren Kalibriermedium 10 reflektierte Licht wird vom Sensor 3 nacheinander für alle Referenzen detektiert. Die Meßsignale des Sensors 3, beispielsweise für die Intensität des vom weiteren Kalibriermedium 10 reflektierten Lichts, werden von der Steuereinrichtung 8 analysiert. Ausgehend von dem verwendeten weiteren Kalibriermedium 10 mit den standardisierten Referenzen und deren dadurch exakt definierten Eigenschaften, kann eine Einstellung des Sensorsystems erfolgen, wenn die vom Sensor 3 gemessenen Intensitäten für die Referenzen nicht den aufgrund der bekannten Eigenschaften des verwendeten weiteren Kalibriermediums 10 erwarteten Intensitäten entsprechen. Da sich das weitere Kalibriermedium 10 über den gesamten Sensor 3 erstreckt, werden für alle Detektoren des Sensors 3 Meßsignale erzeugt, welche die Kalibrierung der jeweiligen Detektoren ermöglichen. Zur Einstellung des Sensorsystems können beispielsweise Korrekturfaktoren berechnet werden, welche vorhandene Abweichungen bei der Kalibrierung des Sensorsystems mit dem ersten Kalibriermedium 10 ausgleichen. Die Korrekturfaktoren werden im nichtflüchtigen Speicher der Steuereinheit 8 gespeichert und bei späteren Messungen für die Erzeugung der Meßsignale verwendet. Es kann auch vorgesehen sein, daß die Intensität der Beleuchtung 4 bzw. deren einzelner Elemente von der Steuereinrichtung 8 verändert wird, bis die bei der Messung vorhandenen Abweichungen ausgeglichen sind. Dabei werden die bestimmten Parameter für die Beleuchtung 4 ebenfalls im nichtflüchtigen Speicher der Steuereinrichtung 8 für spätere Messungen gespeichert. Ebenso ist es möglich, sowohl Korrekturfaktoren für die Meßsignale als auch veränderte Intensitäten der Beleuchtung 4 vorzusehen, um vorhandene Abweichungen ausgleichen zu können. Am Ende des ersten Kalibrierungsschritts können außerdem die Meßsignale des Sensors 4 bzw. der einzelnen Detektoren für spätere Vergleiche gespeichert werden.

Vorteilhafterweise ist es vorgesehen, daß der erste Kalibrierungsschritt nur einmalig, z. B. bei der Herstellung oder nach einer Reparatur des Sensorsystems durchgeführt wird, so daß nur für den ersten Kalibrierungsschritt ein weiteres Kalibriermedium 10 mit den standardisierten Referenzen vorhanden sein muß.

Unmittelbar nach dem ersten Kalibrierungsschritt wird ein zweiter Kalibrierungsschritt mit dem im ersten Kalibrierungsschritt eingestellten Sensorsystem durchgeführt. Dazu wird das innerhalb des Sensorgehäuses 1 vorhandenes Kalibriermedium 6 verwendet, welches Referenzen 6.1 bis 6.8 mit ebenfalls definierten Eigenschaften aufweist. Wie nachfolgend noch erklärt werden wird, kann aber auf die Verwendung von standardisierten und damit teueren Referenzen innerhalb des Sensorsystems als Bestandteil des Kalibriermediums 6 verzichtet werden.

Für den zweiten Kalibrierungsschritt wird, wie in Figur 1 angedeutet und in Figur 3 dargestellt, das Kalibriermedium 6 in den Strahlengang des Sensors 3 vom Antrieb 5 eingebracht.

Im zweiten Kalibrierungsschritt erfolgt eine Beleuchtung des Kalibriermediums 6 bzw. dessen Referenzen 6.1 bis 6.8 durch die Beleuchtung 4. Falls, wie oben für den ersten Kalibrierungsschritt beschrieben, die Intensität der Beleuchtung 4 zur Einstellung verändert wurde, wird die Beleuchtung mit dieser veränderten Intensität betrieben. Das vom Kalibriermedium 6 reflektierte Licht wird vom Sensor 3 bzw. den einzelnen Detektoren erfaßt und für die einzelnen Referenzen 6.1 bis 6.8 nacheinander in entsprechende Meßsignale umgesetzt, beispielsweise für die Intensität des vom Kalibriermedium 6 reflektierten Lichts. Wurden im oben beschriebenen ersten Kalibrierschritt Korrekturfaktoren bestimmt und gespeichert, werden diese bei der Erzeugung der Meßsignale von der Steuereinrichtung 8 verwendet. Die Meßsignale des Sensors 3 bzw. der einzelnen Detektoren für das Kalibriermedium 6 werden von der Steuereinrichtung 8 in ihrem nichtflüchtigen Speicher am Ende des zweiten Kalibrierungsschritts für die Referenzen 6.1 bis 6.8 gespeichert.

Die Meßsignale des zweiten Kalibrierungsschritts werden in aller Regel von den Meßsignalen des ersten Kalibrierungsschritts differieren, da in ihnen einerseits zum Ausdruck kommt, daß nicht das weitere Kalibriermedium 10 mit den standardisierten Referenzen verwendet wird. Andererseits macht sich bemerkbar, daß das Kalibriermedium 6 für die Messung nicht wie das in Figur 3 gestrichelt angedeutete weitere Kalibriermedium 10 außerhalb des Sensorgehäuses 1 im Fokusbereich des Sensors 3 angeordnet ist, sondern um eine Distanz d in das Sensorgehäuse 1 hineinverschoben und damit um die Distanz d außerhalb des Fokusbereichs des Sensorsystems bzw. des Sensors 3 und/oder der Beleuchtung 4 liegt. Da der zweite Kalibrierungsschritt unmittelbar nach dem ersten Kalibrierungsschritt durchgeführt wird, stellen die Meßsignale des zweiten Kalibrierungsschritts eine Grundlage für spätere Kalibrierungen und Einstellungen des Sensorsystems bzw. des Sensors 3 und/oder der Beleuchtung 4 während des normalen Betriebs dar. Die an sich nachteiligen Abweichungen der nicht standardisierten Eigenschaften des Kalibriermediums 6 sowie die an sich nachteilige Verschiebung des Kalibriermediums 6 um die Distanz d aus dem Fokusbereich des Sensors 3 bzw. der Beleuchtung 4 heraus, werden somit automatisch einbezogen, weshalb sie auch bei späteren Kalibrierungen mit dem Kalibriermedium 6 bzw. dessen Referenzen 6.1 bis 6.8 automatisch berücksichtigt werden und den Kalibriervorgang nicht nachteilig beeinflussen können. Zudem können dadurch auch z. B. alterungsbedingte Veränderungen des Kalibriermediums 6 bzw. dessen Referenzen 6.1 bis 6.8 spätre Kalibrierungsvorgänge nicht fehlerhaft beeinflussen, da diese immer geänderte Meßsignale hervorrufen, die bei der Kalibrierung ausgeglichen werden.

Für den Betriebsmodus wird das Referenzmedium 6 unter Steuerung der Steuereinrichtung 8 vom Antrieb 5 aus dem Strahlengang des Sensors 3 bzw. der Beleuchtung 4 entfernt. Während des Betriebsmodus werden dann an dem für das weitere Referenzmedium 10 in Figur 1a dargestellten Ort Meßobjekte, z. B. Banknoten, eingebracht. Dazu kann beispielsweise ein Transportsystem einer Banknotenbearbeitungsmaschine verwendet werden, in welcher das Sensorsystem zur Prüfung von Banknoten verwendet wird. Bei der Auswertung der Meßsignale des Sensors 3 durch die Steuereinrichtung 8 werden zur Prüfung der Banknoten im Betriebsmodus die oben beschriebenen Korrekturfaktoren und/oder die veränderte Intensität der Beleuchtung 4 verwendet.

Nach vorgegebenen Benutzungszeiträumen des Sensorsystems oder beim Einschalten des Sensorsystems bzw. der das Sensorsystem aufweisenden Banknotenbearbeitungsmaschine kann es vorgesehen sein, daß eine erneute Kalibrierung und Einstellung des Sensorsystems bzw. des Sensors 3 und/oder der Beleuchtung in einem Kalibriermodus durchgeführt wird. Dazu wird, wie beim oben beschriebnen zweiten Kalibrierungsschritt, das Kalibriermedium 6 vom Antrieb 5 in den Strahlengang des Sensors 3 und/oder der Beleuchtung 4 eingebracht. Die bei der erneuten Kalibrierung ermittelten Meßsignale des Sensors 3 bzw. der einzelnen Detektoren für die Referenzen 6.1 bis 6.8 werden mit den im nichtflüchtigen Speicher der Steuereinrichtung 8 gespeicherten Meßsignalen des zweiten Kalibrierungsschritts verglichen. Treten Abweichungen auf, wird das Sensorsystem, d. h. der Sensor 3 und/oder die Beleuchtung 4, in der oben für den ersten Kalibrierungsschritt beschriebenen Weise eingestellt. Dazu werden Korrekturfaktoren für die Korrektur der Abweichungen der Meßsignale ermittelt und/oder die Intensität der Beleuchtung 4 bzw. deren einzelner Elemente wird verändert. Die Korrekturfaktoren bzw. die Veränderung der Intensität der Beleuchtung 4 werden im nichtflüchtigen Speicher der Steuereinrichtung 8 gespeichert und nachfolgend im Betriebsmodus verwendet, für den das Kalibriermedium 6 unter Steuerung der Steuereinrichtung 8 vom Antrieb 5 erneut aus dem Strahlengang des Sensors 3 entfernt wird.

Die bei der erneuten Kalibrierung festgestellten Abweichungen zwischen den bei der Kalibrierung ermittelten Meßsignalen und den im nichtflüchtigen Speicher der Steuereinrichtung 8 gespeicherten Meßsignalen des zweiten Kalibrierungsschritts erlauben zudem eine Aussage über bestimmte Drifterscheinungen des Sensorsystems, also alterungs-, verschmutzungs- usw. - bedingte Veränderungen von Sensor 3, Beleuchtung 4, zweitem Kalibermedium 6 usw.

Bei den oben beschriebenen Ausführungsformen ist ein in Reflektion messender Sensor 3 mit zugehöriger Beleuchtung 4 dargestellt. Es ist aber offensichtlich, daß auch ein in Transmission messender Sensor, mit einer dem Sensor außerhalb des Sensorgehäuses 1 gegenüberliegenden Beleuchtung kalibriert werden kann. Dazu müssen die Kalibriermedien 6, 10 sowie deren Referenzen entsprechend gewählt sein, insbesondere müssen diese zumindest für einen Teil des Lichts der Beleuchtung 4 durchlässig sein. Es ist offensichtlich, daß neben den beschriebenen optischen Sensoren auch andere Sensoren mit dem vorgeschlagenen Verfahren kalibriert werden können, wenn Kalibriermedien 6, 10 sowie deren Referenzen mit entsprechenden sensorspezifischen Eigenschaften gewählt werden.

In der obigen Beschreibung wurde beispielhaft ausgeführt, daß die Einstellung des Sensorsystems aufgrund der bei der Kalibrierung festgestellten Abweichungen mittels Korrekturfaktoren und/oder einer Veränderung der Intensität der Anregungsquelle vorgenommen werden kann. Die Einstellung des Sensorsystems, d. h. die Korrektur der festgestellten Abweichungen, kann aber auch auf anderen Wegen erreicht werden. Beispielsweise kann die Verstärkung von Verstärkern verändert werden, mit welchen die vom Sensor bzw. den einzelnen Detektoren stammenden Meßsignale für die weitere Verarbeitung verstärkt werden.

## Patentansprüche

1. Verfahren für die Kalibrierung eines optischen Sensorsystems in einem Sensorgehäuse (1), mit mindestens einem Sensor (3) und mindestens einer Lichtquelle (4), einer Steuereinrichtung (8) zur Steuerung des Sensorsystems, einem Kalibriermedium (6) und einem Antrieb (5), der das Kalibriermedium (6), gesteuert durch die Steuereinrichtung (8), in einem Kalibriermodus für die Kalibrierung des Sensorsystems in einen Strahlengang des Sensorsystems bewegt und das Kalibriermedium in einem Betriebsmodus für die Prüfung von Meßobjekten, insbesondre Banknoten, aus dem Strahlengang des Sensorsystems herausbewegt, wobei
das Kalibriermedium (6) mehr als eine Referenz (6.1 bis 6.8) aufweist, der Antrieb (5), gesteuert durch die Steuereinrichtung (8), das Kalibriermedium (6) derart in den Strahlengang des Sensorsystems bewegt, daß eine der Referenzen (6.1 bis 6.8) einen Erfassungsbereich des Sensorsystems abdeckt, und das Sensorsystem die im Erfassungsbereich liegende Referenz (6.1 bis 6.8) mißt,
der Antrieb (5) das Kalibriermedium (6) unter Steuerung der Steuereinrichtung (8) mindestens einmal um eine vorgegebene Strecke (b) oder ein Vielfaches der vorgegebenen Strecke (b) bewegt, so daß eine andere der Referenzen (6.1 bis 6.8) den Erfassungsbereich abdeckt, und das Sensorsystem die im Erfassungsbereich liegende andere Referenz (6.1 bis 6.8) mißt, und
die vorgegebene Strecke (b) einer Ausdehnung der einzelnen Referenzen (6.1 bis 6.8) des Kalibriermediums (6) entspricht, in deren Richtung der Antrieb (5) das Kalibriermedium (6) bewegt,
**gekennzeichnet durch**
einen ersten Kalibrierungsschritt, bei dem ein von dem Sensorsystem unabhängiges weiteres Kalibriermedium (10), mit standardisierten Referenzen, in einen außerhalb des Sensorgehäuses (1) liegenden Fokusbereich des Sensorsystems eingebracht wird und den gesamten Erfassungsbereich des Sensorsystems abdeckt, an dem sich während des Betriebsmodus das jeweils zu prüfende Meßobjekt befindet, wobei die Lichtquelle (4) des Sensorsystems das weitere Kalibriermedium (10) mit einem Anregungssignal anregt und nacheinander aufgrund des Anregungssignals von den standardisierten Referenzen des weiteren Kalibriermediums (10) erzeugte Signale von mindestens einem Sensor (3) des Sensorsystems detektiert und Meßsignale erzeugt werden, und wobei aufgrund der Meßsignale eine Einstellung des Sensorsystems vorgenommen wird, und
einen zweiten Kalibrierungsschritt, der unmittelbar nach dem ersten Kalibrierungsschritt durchgeführt wird, wobei das Kalibriermedium (6), mit nicht standardisierten Referenzen (6.1 bis 6.8), an einen Ort in den Strahlengang des Sensorsystems eingebracht wird, der um eine Distanz (d) zum Fokusbereich des Sensorsystems in das Sensorgehäuse (1) hinein versetzt ist, und den gesamten Erfassungsbereich des Sensorsystems abdeckt, wobei die Lichtquelle (4) des Sensorsystems das Kalibriermedium (6) mit dem Anregungssignal anregt und nacheinander aufgrund des Anregungssignals von den Referenzen (6.1 bis 6.8) des Kalibriermediums (6) erzeugte Signale vom Sensor (3) detektiert und Meßsignale erzeugt werden, und
wobei die Meßsignale des zweiten Kalibrierungsschritts gespeichert werden, und weiterhin
**dadurch** gekennzeichnet, daß
im Kalibriermodus das Kalibriermedium (6) erneut an den Ort in den Strahlengang des Sensorsystem eingebracht wird, der um die Distanz (d) zum Fokusbereich des Sensorsystems in das Sensorgehäuse (1) hinein versetzt ist, und den gesamten Erfassungsbereich des Sensorsystems abdeckt, wobei die Lichtquelle (4) des Sensorsystems das Kalibriermedium (6) mit dem Anregungssignal anregt und nacheinander aufgrund des Anregungssignals von den Referenzen (6.1 bis 6.8) des Kalibriermediums (6) erzeugte Signale vom Sensor (3) detektiert und Meßsignale erzeugt werden, und wobei die Meßsignale des Kalibriermodus mit dem gespeicherten Meßsignalen des zweiten Kalibrierungsschritts verglichen werden, und
eine Einstellung des Sensorsystems vorgenommen wird, falls eines oder mehrere der Meßsignale des Kalibriermodus von den gespeicherten Meßsignalen des zweiten Kalibrierungsschritts abweichen.

2. Verfahren nach Anspruch 1, wobei die Referenzen (6.1 bis 6.8) des Kalibriermediums (6) und die Referenzen des weiteren Kalibriermediums (10) vergleichbare Eigenschaften aufweisen.

3. Verfahren nach Anspruch 1 oder 2, wobei die Kalibrierung und Einstellung des Sensors (3) für eine Vielzahl den Sensor (3) bildender Detektoren vorgenommen und für jeden Detektor Meßsignale erzeugt und gespeichert werden.

4. Verfahren nach einem der Ansprüche 1 bis 3, wobei zur Einstellung des Sensorsystems Korrekturfaktoren bestimmt werden, mit denen die Meßsignale des Sensors (3) korrigiert werden.

5. Verfahren nach einem der Ansprüche 1 bis 4, wobei zur Einstellung des Sensorsystems eine Intensität des Anregungssignals der Lichtquelle (4) verändert wird.

## Claims

1. A method for the calibration of an optical sensor system in a sensor housing (1), having at least one sensor (3) and at least one light source (4), a control device (8) for controlling the sensor system, a calibration medium (6) and a drive (5) which moves the calibration medium (6) under the control of the control device (8) into an optical path of the sensor system in a calibration mode for the calibration of the sensor system, and moves the calibration medium out of the optical path of the sensor system in an operating mode for the testing of measuring objects, in particular banknotes, wherein
the calibration medium (6) has more than one reference (6.1 to 6.8), the drive (5) moves the calibration medium (6) under the control of the control device (8) into the optical path of the sensor system in such a way that one of the references (6.1 to 6.8) covers a detection area of the sensor system, and the sensor system measures the reference (6.1 to 6.8) located in the detection area,
the drive (5) moves the calibration medium (6) under the control of the control device (8) at least one time by a predetermined stretch (b) or a multiple of the predetermined stretch (b), so that another one of the references (6.1 to 6.8) covers the detection area and the sensor system measures the other reference (6.1 to 6.8) located in the detection area, and
the predetermined stretch (b) corresponds to an extent of the calibration mediums' (6) individual references (6.1 to 6.8) in whose direction the drive (5) moves the calibration medium (6),
**characterized by**
a first calibration step in which a further calibration medium (10) independent of the sensor system, having standardized references, is introduced into a focus area of the sensor system located outside of the sensor housing (1) and covers the entire detection area of the sensor system where the respective measuring object to be tested in each case is located during the operating mode, wherein the light source (4) of the sensor system excites the further calibration medium (10) with an excitation signal and signals successively generated by the standardized references of the further calibration medium (10) due to the excitation signal are detected by at least one sensor (3) of the sensor system and measuring signals are generated; and wherein an adjustment of the sensor system is effected due to the measuring signals, and
a second calibration step, which is performed immediately after the first calibration step, wherein the calibration medium (6), having non-standardized references (6.1 to 6.8), is introduced into the optical path of the sensor system at a place which is shifted into the sensor housing (1) by a distance (d) in relation to the focus area of the sensor system and covers the entire detection area of the sensor system, wherein the light source (4) of the sensor system excites the calibration medium (6) with the excitation signal and signals successively generated by the references (6.1 to 6.8) of the calibration medium (6) are detected by the sensor (3) and measuring signals are generated, and
wherein the measuring signals of the second calibration step are stored, and further **characterized in that**
during the calibration mode, the calibration medium (6) is again introduced into the optical path of the sensor system at the place which is shifted into the sensor housing (1) by the distance (d) in relation to the focus area of the sensor system and covers the entire detection area of the sensor system, wherein the light source (4) of the sensor system excites the calibration medium (6) with the excitation signal and signals successively generated by the references (6.1 to 6.8) of the calibration medium (6) are detected by the sensor (3) and measuring signals are generated, and wherein the measuring signals of the calibration mode are compared with the stored measuring signals of the second calibration step; and
an adjustment of the sensor system is effected, if one or several of the measuring signals of the calibration mode deviate from the stored measuring signals of the second calibration step.

2. The method according to claim 1, wherein the references (6.1 to 6.8) of the calibration medium (6) and the references of the further calibration medium (10) have comparable properties.

3. The method according to claim 1 or 2, wherein the calibration and adjustment of the sensor (3) are effected for a multiplicity of detectors forming the sensor (3) and for each detector measuring signals are generated and stored.

4. The method according to any of claims 1 to 3, wherein for adjusting the sensor system correction factors are determined with which the measuring signals of the sensor (3) are corrected.

5. The method according to any of claims 1 to 4, wherein for adjusting the sensor system an intensity of the excitation signal of the light source (4) is changed.

## Revendications

1. Procédé destiné à l'étalonnage d'un système de capteur optique dans un boîtier de capteur (1) doté au moins d'un capteur (3) et au moins d'une source lumineuse (4), d'un équipement de commande (8) pour la commande du système de capteur, d'un moyen d'étalonnage (6) et d'un entraînement (5) qui déplace le moyen d'étalonnage (6), commandé par l'équipement de commande, (8) dans un mode d'étalonnage pour l'étalonnage du système de capteur dans un couloir de rayonnement du système de capteur et déplace le moyen d'étalonnage dans un mode de fonctionnement pour la vérification d'objets à mesurer, en particulier de billets de banque, en le faisant sortir du couloir de rayonnement du système de capteur, cependant que le moyen d'étalonnage (6) présente plus qu'une référence (6.1 à 6.8), que l'entraînement (5), commandé par l'équipement de commande (8), déplace de telle manière le moyen d'étalonnage (6) en l'amenant dans le couloir de rayonnement du système de capteur qu'une des références (6.1 à 6.8) couvre une zone de saisie du système de capteur et que le système de capteur mesure la référence (6.1 à 6.8) se trouvant dans la zone de saisie,
l'entraînement (5) déplace le moyen d'étalonnage (6) sous la commande de l'équipement de commande (8) au moins une fois d'un tronçon (b) prédéterminé ou d'un multiple du tronçon (b) prédéterminé, de telle sorte qu'une autre des références (6.1 à 6.8) couvre la zone de saisie et que le système de capteur mesure l'autre référence (6.1 à 6.8) se trouvant dans la zone de saisie, et
le tronçon (b) prédéterminé correspond à une extension des différentes références (6.1 à 6.8) du moyen d'étalonnage (6) en direction de laquelle l'entraînement (5) déplace le moyen d'étalonnage (6),
**caractérisé par**
une première étape d'étalonnage lors de laquelle un autre moyen d'étalonnage (10) indépendant du système de capteur, à références standardisées, est introduit dans une zone de focalisation du système de capteur située à l'extérieur du boîtier de capteur (1) et couvre la totalité de la zone de saisie du système de capteur à laquelle se trouve, durant le mode de fonctionnement, l'objet à respectivement mesurer, cependant que la source lumineuse (4) du système de capteur excite l'autre moyen d'étalonnage (10) avec un signal d'excitation et que, les uns après les autres, des signaux générés en raison du signal d'excitation par les références standardisées de l'autre moyen d'étalonnage (10) sont détectés par au moins un capteur (3) du système de capteur et que des signaux de mesure sont générés, et cependant que, en raison des signaux de mesure, un réglage du système de capteur est effectué, et
une deuxième étape d'étalonnage exécutée juste après la première étape d'étalonnage, cependant que le moyen d'étalonnage (6), à références non standardisées (6.1 à 6.8), est introduit à un endroit dans le couloir de rayonnement du système de capteur qui est décalé d'une distance (d), par rapport à la zone de focalisation du système de capteur, dedans le boîtier de capteur (1), et couvre la totalité de la zone de saisie du système de capteur, cependant que la source lumineuse (4) du système de capteur excite le moyen d'étalonnage (6) avec le signal d'excitation et que, les uns après les autres, des signaux générés en raison du signal d'excitation par les références (6.1 à 6.8) du moyen d'étalonnage (6) sont détectés par le capteur (3) et que des signaux de mesure sont générés, et cependant que les signaux de mesure de la deuxième étape d'étalonnage sont mémorisés, et, en outre,
**caractérisé en ce que**
dans le mode d'étalonnage, le moyen d'étalonnage (6) est à nouveau introduit à l'endroit dans le couloir de rayonnement du système de capteur qui est décalé d'une distance (d), par rapport à la zone de focalisation du système de capteur, dedans le boîtier de capteur (1), et couvre la totalité de la zone de saisie du système de capteur, cependant que la source lumineuse (4) du système de capteur excite le moyen d'étalonnage (6) avec le signal d'excitation et que, les uns après les autres, des signaux générés en raison du signal d'excitation par les références (6.1 à 6.8) du moyen d'étalonnage (6) sont détectés par le capteur (3) et que des signaux de mesure sont générés, et cependant que les signaux de mesure du mode d'étalonnage sont comparés avec les signaux de mesure mémorisés de la deuxième étape d'étalonnage, et
un réglage du système de capteur est effectué dans le cas où un ou plusieurs des signaux du mode d'étalonnage divergent des signaux de mesure mémorisés de la deuxième étape d'étalonnage.

2. Procédé selon la revendication 1, cependant que les références (6.1 à 6.8) du moyen d'étalonnage (6) et les références de l'autre moyen d'étalonnage (10) présentent des propriétés comparables.

3. Procédé selon la revendication 1 ou 2, cependant que l'étalonnage et le réglage du capteur (3) sont effectués pour une pluralité de détecteurs constituant le capteur (3), et que, pour chaque détecteur, des signaux de mesure sont générés et mémorisés.

4. Procédé selon une des revendications de 1 à 3, cependant que, pour le réglage du système de capteur, des facteurs de correction sont déterminés, avec lesquels les signaux de mesure du capteur (3) sont corrigés.

5. Procédé selon une des revendications de 1 à 4, cependant que, pour le réglage du système de capteur, une intensité du signal d'excitation de la source lumineuse (4) est modifiée.
